(19) Europäisches Patentamt
European Patent Office
Office européen des brevets

(11) Publication number: **0 447 070 B1**

# (12) EUROPEAN PATENT SPECIFICATION

(45) Date of publication of patent specification: **26.04.95**

(51) Int. Cl.6: **C08F 10/02**, C08F 4/76, C08F 4/655

(21) Application number: **91301672.1**

(22) Date of filing: **28.02.91**

## (54) Catalyst and prepolymer used for polymerising olefins, and (co)polymer of ethylene obtainable therefrom.

(30) Priority: **12.03.90 FR 9003368**

(43) Date of publication of application:
**18.09.91 Bulletin 91/38**

(45) Publication of the grant of the patent:
**26.04.95 Bulletin 95/17**

(84) Designated Contracting States:
**AT BE CH DE DK ES FR GB GR IT LI LU NL SE**

(56) References cited:
**EP-A- 0 206 794**
**EP-A- 0 318 048**
**US-A- 4 659 685**

(73) Proprietor: **BP Chemicals Limited**
**Britannic House**
**1 Finsbury Circus**
**London EC2M 7BA (GB)**
(84) Designated Contracting States:
**BE CH DE DK ES GB GR IT LI LU NL SE AT**

(73) Proprietor: **BP CHEMICALS S.N.C.**
**Tour Neptune**
**la Défense 1,**
**20, Place de Seine**
**F-92400 Courbevoie (FR)**
(84) Designated Contracting States:
**FR**

(72) Inventor: **Bailly, Jean-Claude André, BP Chemicals S.N.C.**
**Tour Neptune,**
**La Defense 1,**
**20 Place de Seine**
**F-92400 Courbevoie (FR)**
Inventor: **Chabrand, Christine Jacqueline, BP Chemicals S.N.C**
**Tour Neptune,**
**La Defense 1,**
**20 Place de Seine**
**F-92400 Courbevoie (FR)**

(74) Representative: **Denbigh, Keith Warwick et al**
**BP INTERNATIONAL LIMITED**
**Patents & Agreements Division**
**Chertsey Road**
**Sunbury-on-Thames**
**Middlesex, TW16 7LN (GB)**

EP 0 447 070 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a solid catalyst based on a supported zirconium metallocene and to a process for (co-)polymerising olefins.

It is known that it is possible to manufacture polyolefins in the presence of a catalyst system comprising a catalyst based on a zirconium metallocene and a cocatalyst consisting of an organoaluminium compound, especially an aluminoxane. However, this catalyst is preferably employed in a homogeneous process such as in solution in a liquid aromatic hydrocarbon; it is not suited to heterogeneous processes of polymerisation in suspension in aliphatic hydrocarbons or in gaseous phase.

According to European Patent Application EP-A-0318048, it is known to manufacture polyolefins with the aid of a catalyst system comprising a solid catalyst based on $TiCl_4$ or $VOCl_3$ and supported on a spherical carrier consisting of an adduct of a magnesium chloride with an alcohol. The solid catalyst is used for polymerising olefins with a cocatalyst consisting a zirconium metallocene.

According to European Patent Application EP-A-0206794, it is known to prepare an olefin catalyst comprising the reaction product of a metallocene and an aluminoxane, formed in the presence of a silica support. The metallocene is selected from titanium, zirconium, hafnium and vanadium metallocenes and mixtures thereof.

For a number of years attempts have been made to develop a high-activity solid catalyst comprising a zirconium metallocene for a heterogeneous process of the (co-)polymerisation of olefins especially of ethylene. In particular, a solid catalyst whose support can receive a large quantity of zirconium has been sought. Attempts have been made, furthermore, to develop a catalyst suited to the heterogeneous processes of polymerisation of olefins in suspension in an aliphatic hydrocarbon or in gaseous phase, processes in which it is important to be able to control the size, the particle size distribution and the morphology of the catalyst particles at the same time. It has also been shown to be important that any solid catalyst should be able to withstand the growth stresses during a polymerisation especially in the initial stage of a gas phase polymerisation. We have found that the growth stresses with zirconium metallocene catalysts are generally much greater than those of a catalyst based on titanium or vanadium chloride which is less active in olefin polymerisation. It is also desirable that the solid catalyst be capable of producing an ethylene polymer or copolymer with an easily controllable average molecular weight and a broad molecular weight distribution capable of being of a bimodal type, so as to enable this polymer or copolymer to be shaped using injection, moulding or especially extrusion.

It has now been found that it is possible to prepare a solid catalyst with high activity in the (co-)polymerisation of olefins, prepared by contacting a zirconium metallocene and a titanium and/or vanadium halide with a magnesium chloride. In particular, the catalyst is in the form of spheroidal particles which are suited to a heterogeneous polymerisation of olefins in suspension or in gaseous phase and which are capable of withstanding the enormous growth stresses during the polymerisation.

The present invention relates therefore to a solid catalyst suitable for a heterogeneous process for polymerising one or more olefins, in particular ethylene, the solid catalyst being prepared by contacting a zirconium metallocene with a magnesium chloride support, characterised in that the solid catalyst is obtainable by a process comprising:

(1) a first stage wherein a solid support (A) containing from 80 to 99.5 mol % of magnesium dichloride and from 0.5 to 20 mol % of at least one organic electron-donor compound, D1, free from labile hydrogen, the solid support (A) being in the form of spheroidal particles having a mass-mean diameter, Dm, of 10 to 100 microns and a narrow particle size distribution, such that the ratio of Dm to the number-average diameter, Dn, of the particles is not higher than 3, preferably not higher than 2.5 and especially not higher than 2, is brought into contact with at least one electron-donor compound, D2, containing labile hydrogen, to form a support (A'),

(2) then, a second stage, wherein the support (A') is brought into contact with a zirconium metallocene (B) and at least one halide (C) of a transition metal (TM) chosen from titanium and vanadium, and optionally with an organo aluminium compound (E), preferably an aluminoxane.

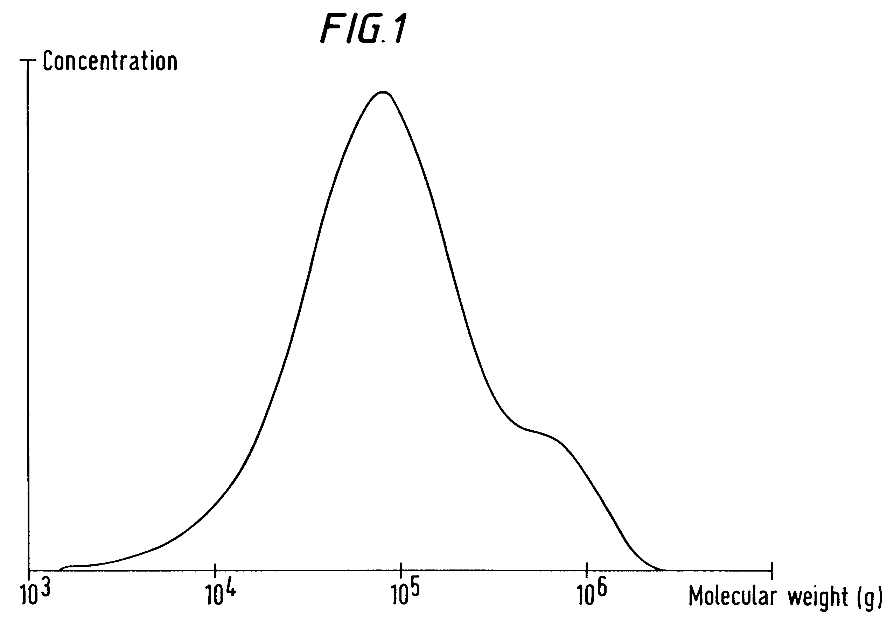

Figure 1 shows a molecular weight distribution curve of a polyethylene obtained with a catalyst prepared according to the present invention.

In the process for the preparation of the catalyst, a particular magnesium chloride support (A) is used, containing an organic electron-donor compound, D1, in a relatively large quantity. The support comprises from 80 to 99.5 mol% preferably from 80 to 95 mol% and especially from 80 to 90 mol% of magnesium dichloride and from 0.5 to 20 mol% preferably from 5 to 20 mol% and especially from 10 to 20 mol% of the compound D1.

The support (A), which is based essentially on magnesium dichloride, may additionally contain a chlorine containing aluminium derivative, such as aluminium trichloride, as well as optionally a magnesium chloride containing Mg-C bonds. The quantity of chlorine containing aluminium derivative may be lower than or equal to 30 mol%, preferably 20 mol% or less relative to the magnesium dichloride such as 1 to 20 mol%. The quantity of Mg-C bonds may be lower than or equal to 10 mol%, preferably 1 mol% or less relative to magnesium dichloride. Especially, the support (A) contains substantially no Mg-C bond.

The organic electron-donor compound, D1, is generally known as a Lewis base and must be free from labile hydrogen. It cannot, for example, be chosen from water, alcohols or phenols. It has an ability to complex magnesium dichloride. It is advantageously chosen from ethers, esters, thioethers, sulphones, sulphoxides, secondary amides, tertiary amines, tertiary phosphines and phosphoramides. Electron-donor compounds of low complexing power, such as cyclic or non-cyclic ethers, are preferred.

The organic electron-donor compound, D1, is advantageously distributed throughout the support particle, forming a homogeneous composition of magnesium dichloride and compound D1. Consequently, a support of this kind cannot normally be prepared merely by bringing anhydrous magnesium dichloride particles into contact with the compound D1. For this reason it is recommended that the support (A) be prepared by precipitation of magnesium dichloride in the presence of the compound D1.

The support (A) consists of particles whose specific surface area (BET) may be from 20 to 100 $m^2/g$, preferably from 30 to 60 $m^2/g$.

It consists of spheroidal particles which have a substantially spherical shape, e.g. in which the ratio D/d of the particles is close to 1, D and d being the major axis and the minor axis of the particles respectively. The ratio D/d is therefore lower than or equal to 1.5 preferably 1.4 or less and especially 1.3 or less, such as 1 to 1.5, or 1 to 1 .4, or 1 to 1.3.

The particles of the support (A) have a mass-mean diameter Dm of 10 to 100 microns, preferably of 15 to 70 microns and especially 20 to 50 microns. They have a narrow particle size distribution, such that the ratio Dm/Dn of the mass-average diameter, Dm, to the number-average diameter, Dn, is not higher than 3, preferably not higher than 2.5 and especially not higher than 2. Preferably there is a virtually total absence of particles of diameter greater than 1.5 x Dm or smaller than 0.6 x Dm; the particle distribution is usually such that more than 90% by weight of the particles of a same single batch have a particle size in the range Dm ± 10%.

The support (A) may, in particular, be prepared by reacting a dialkylmagnesium compound with an organic chlorine compound in the presence of the electron-donor compound, D1, acting as a complexing agent and not as a reactant in this preparation. For this reason in this production process, the compound D1 cannot be chosen from electron-donor compounds e.g. esters, capable of reaction with organomagnesium compounds. The dialkyl-magnesium compound chosen may be a product of formula R1MgR2 in which R1 and R2 are identical or different alkyl radicals containing from 2 to 12 carbon atoms, and which is soluble in the hydrocarbon medium in which the preparation of the support will preferably be carried out. The organic chlorine compound is an alkyl chloride of formula R3C1 in which R3 is a secondary, preferably, tertiary alkyl radical containing from 3 to 12 carbon atoms. It is preferred to employ, as electron-donor compound D1, an ether of formula R8OR9 in which R8 and R9 are identical or different alkyl radicals, especially containing from 1 to 12 carbon atoms.

The various reactants used for the preparation of the support (A) can be used with:

- a molar ratio R3C1/R1MgR2 of from 1.5 to 2.5, preferably from 1.9 to 2.3,
- a molar ratio D1/R1MgR2 of from 0.1 to 1.2, preferably from 0.3 to 0.8.

The reaction between R1MgR2 and R3C1 in the presence of the electron-donor compound, D1, is a precipitation which takes place in an inert liquid medium, e.g. a liquid hydrocarbon, with stirring preferably at a temperature of 0 to 100 °C. To obtain an excellent support, in particular one with a large quantity of the electron-donor compound D1, it is recommended to perform the precipitation at a relatively low temperature ranging from 10 to 50 °C, preferably from 15 to 35 °C.

Preferably the precipitation reaction should proceed extremely slowly, over a period of at least 10 hours e.g. 10 to 50 hours, preferably a period ranging from 10 to 24 hours, so as to permit the formation of the particular support (A) and in particular the insertion of a large quantity of compound D1 and its uniform dispersion throughout the support.

The first stage of the catalyst preparation consists in bringing the support (A) into contact with an electron-donor compound D2 containing labile hydrogen e.g. an alcohol, a phenol, a primary amide, a primary or secondary amine, a primary or secondary phosphine, or a carboxylic acid. D2 is preferably chosen from alcohols and phenols. It is preferred to employ an alcohol containing from 1 to 12 carbon atoms, in particular ethanol, propanol, n-butanol, n-pentanol or n-hexanol. The compound D2 generally has a complexing power for magnesium chloride which is higher than that of the compound D1.

From 0.05 to 2.5 moles, preferably from 0.1 to 1 mole and especially from 0.2 to 1 mole of compound D2 can be used per mole of magnesium of the support (A). If the amount of D2 is too high, the new support (A') formed gets more fragile. The contact of the compound D2 with the support (A) may be brought about at 0 to 100 °C, preferably 0 to 70 °C. It is preferably brought about with agitation e.g. stirring preferably in an aliphatic or aromatic liquid hydrocarbon such as n-hexane or toluene, over a period which can range from 10 minutes to 5 hours. In practice, the contact can be brought about in various ways, for example by slow addition of the compound D2 to the support (A) in a suspension in a liquid hydrocarbon preferably under a continuous agitation. It is generally found that most of the compound D2 employed in this stage becomes fixed or complexed in the support without appreciably modifying the morphology of the support. Only the specific surface area of the support is increased and helps to fix or deposit in the support a relatively high amount of zirconium, titanium and or vanadium which are strongly bound to the support. Thus treated with the compound D2, the support (A') may be washed one or more times with the aid of an inert liquid hydrocarbon before proceeding to the next stage. The support (A') may have the general formula:

$MgCl_2, xD_1, yD_2$

wherein D1 and D2 denote the above-mentioned electron-donor compounds, x is a number ranging from 0.0005 to 0.15, especially from 0.001 to 0.1 and y is a number ranging from 0.05 to 2.5 particularly from 0.1 to 1.

The second stage of the catalyst preparation consists in bringing the support (A') into contact with the zirconium metallocene (B) and the transition metal (TM) halide (C). The zirconium metallocene (B) is a metallocene containing a tetravalent zirconium, with at least one Zr-C bond with is a covalent or a pi-bonded one. It is also called zirconocene and preferably corresponds to the general formula

R4 R5 R6 R7 Zr

in which R4 denotes a cyclo-alkadienyl radical or a cycloalkadienyl radical substituted by at least one alkyl radical e.g. of 1 to 6 carbon atoms such as methyl or ethyl, or by at least one alkoxy radical e.g. of 1 to 6 carbon atoms such as methoxy, ethoxy, propoxy or butoxy, or a fused ring cycloalkadienyl group e.g. of 7 to 14 carbon atoms such as indenyl or tetrahydroindenyl, and each R5, R6 or R7 being identical or different denotes a cycloalkadienyl radical, a cycloalkadienyl radical substituted by at least one alkyl or alkoxy radical e.g. of 1 to 6 carbon atoms such as methyl, ethyl, methoxy, ethoxy, propoxy or butoxy, on aryl radical e.g. an aromatic hydrocarbyl group such as one of 6 to 19 carbon atoms such as phenyl, an alkyl radical e.g. of 1 to 6 carbon atoms such as methyl ethyl, a cycloalkyl radical e.g. of 5 to 7 carbon atoms such as cyclohexyl, an aralkyl radical e.g. of 7 to 19 carbon atoms such as aromatic hydrocarbyl alkyl e.g. benzyl, a halogen atom e.g. chlorine or bromine, an alkoxy radical e.g. of 1 to 12 carbon atoms such as methoxy, ethoxy, propoxy or butoxy, or a hydrogen atom, provided that when R5 represents a cycloalkadienyl radical or a substituted cycloalkadienyl radical, or a fused ring cycloalkadienyl group, R4 and R5 may be bonded to each other either directly or via a lower alkylene group e.g. of 1 to 4 carbon atoms such as ethylene. The cycloalkadienyl radical is preferably one with a conjugated C5 ring diene group, such as cyclopentadienyl. Examples of suitable radicals for R4, R5, R6 or R7 may contain 5 to 22 e.g. 6 to 22 carbon atoms and preferably are methylcyclopentadienyl, ethylcyclopentadienyl, dimethylcyclopentadienyl, indenyl, ethylenebisindenyl or tetrahydroindenyl radical. Preferably, the zirconium metallocene may also comprises at least one Zr-X bond, wherein X represents a halogen atom e.g. a chlorine or bromine atom, or an alkoxy radical e.g. of 1 to 12 carbon atoms. Preferred zirconium metallocene are ones wherein R4 and R5 are optionally substituted cycloalkadienyl or bonded together preferably via alkylene group, R6 is halide especially chloride, and R7 is alkyl e.g. methyl, or halide e.g. chloride. The zirconium metallocene may, in particular, be chosen from
bis(cyclopentadienyl)dichlorozirconium,
bis(cyclopentadienyl)methylchlorozirconium and
bis-(4,5,6,7-tetrahydroindenyl)ethylenedichlorozirconium.

During the second stage the support (A') is also brought into contact with a transition metal halide (C). The latter is a halide, preferably a chloride or a bromide, of a transition metal (TM) which is chosen from titanium or vanadium. The transition metal halide (C) usually is a titanium or vanadium non-metallocene halide. In particular, the halide (C) may be a chloride or a bromide and comprises a titanium or a vanadium which is tetravalent, trivalent, or even divalent, or a pentavalent vanadium. It is recommended that the transition metal halide (C) should have at least one halogen per atom of transition metal. It may additionally

have one or more alkoxy radicals e.g. of 1 to 6 carbon atoms such as methoxy, ethoxy, propoxy, isopropoxy or butoxy. It is preferred to employ titanium tetrachloride, vanadium tetrachloride or vanadyl trichloride.

During the second stage the support (A') may be advantageously brought into contact with an organoaluminium compound (E), preferably an aluminoxane, because the compound (E) or preferably the aluminoxane helps to deposit in the support relatively large amounts of zirconium, titanium and/or vanadium which are then more strongly bound to the support. The compound (E), may be a trialkyaluminium e.g. trimethylaluminium or triethylaluminium, or an alkylaluminium hydride, an alkylaluminium alkoxide, or an alkylaluminium halide e.g. diethylaluminium chloride, or preferably an aluminoxane. The latter may be either a linear aluminoxane corresponding to the general formula $(R)_2A10(A1(R)\text{-}0)_nA1(R)_2$ in which R denotes an alkyl radical e.g. of 1 to 6 carbon atoms, such as methyl or ethyl, and n is a number ranging from 2 to 40, preferably from 10 to 20, or a cyclic aluminoxane corresponding to the general formula

$$\left[\;(A1(R)-0)_{n+2}\;\right]$$

in which R and n are as defined above. The aluminoxane is preferably a methylaluminoxane.

In the second stage the support (A') may be employed in the form of a suspension in an aliphatic hydrocarbon or, preferably, in an aromatic hydrocarbon.

The zirconium metallocene (B) may be used in the form of a solution, especially in an aromatic hydrocarbon such as toluene. The concentration of the solution may be from 0.1 to 50 millimoles of zirconium per litre. The organoaluminium compound (E), preferably the aluminoxane, may also be used in the form of a solution in a hydrocarbon solvent, especially an aromatic hydrocarbon such as toluene, at a concentration which may go up to 30% by weight of aluminium. The transition metal halide (C) may be employed in the pure state, in the form of a liquid, or in solution in a hydrocarbon solvent, preferably an aliphatic hydrocarbon.

The contact of the support (A') with the zirconium metallocene (B) and the transition metal halide (C) may be brought about in various ways.

It is possible, for example, to add the support (A') and then the halide (C) to a solution of zirconium metallocene (B), or the reverse.

It is also possible to add to the support (A') a solution of the zirconium metallocene (B) and the halide (C) simultaneously, or else the halide (C) and a solution of the zirconium metallocene (B) in succession. Preferably, a solution of the zirconium metallocene (B) and then the halide (C) may be added to the support (A').

The contact may be preferably brought about in the presence of the compound (E) preferably the aluminoxane. In this case, the contact with the support (A') may be brought about in various ways. It is possible, for example, to add to the support (A') a solution of the zirconium metallocene (B) and a solution of the compound (E) simultaneously, or preferably a mixture of these two solutions in a first step and then the halide (C) in a second step. It is also possible to add the support (A') and then the halide (C) to a solution of the zirconium metallocene (B) mixed with the compound (E). It is also possible to add to the support (A') a solution of the compound (E) and then successively a solution of the zirconium metallocene (B) and the halide (C), or else successively the halide (C) and a solution of the zirconium metallocene (B), or simultaneously the halide (C) and a solution of the zirconium metallocene (B).

It is also possible to add to the support (A') the halide (C) and then successively a solution of the compound (E) and a solution of the zirconium (B), or else successively a solution of the zirconium metallocene (B) and a solution of the compound (E), or else the two solutions simultaneously or a mixture of the two solutions.

It is also possible to add to a solution of the halide (C) the support (A') and then successively a solution of the compound (E) and a solution of the zirconium metallocene (B) or else successively a solution of the zirconium metallocene (B) and a solution of the compound (E), or else the two solutions simultaneously or a mixture of the two solutions.

It is possible to add to a solution of the zirconium metallocene (B) firstly a solution of the compound (E), then successively the support (A') and the halide (C), or else the support (A') and then successively a solution of the compound (E) and the halide (C).

It is also possible to add to a solution of the compound (E) the support (A') and then successively a solution of the zirconium metallocene (B) and the halide (C), or else successively a solution of the

compound (E) and a solution of the zirconium metallocene (B), or the halide (C) and a solution of the zirconium metallocene (B) simultaneously.

These successive additions may be separated by interspersing with one or more operations of washing with an inert liquid hydrocarbon e.g. n-hexane. Also they can be performed by being sequenced immediately one after the other or else by being separated by periods ranging from a few minutes to a few hours, preferably from 5 minutes to 5 hours.

In all cases it is preferably that the contact be brought about with agitation e.g. stirring, for a total period ranging from 10 minutes to 20 hours, preferably from 30 minutes to 10 hours. During the second stage, each addition of a component may be very fast or slow and uniform over a period which can range from 5 minutes to 5 hours. The temperature can be from 0°C to the boiling temperature of the hydrocarbon solvent employed in the solution(s) and is preferably from 0°C to 110°C. The temperature may be kept constant throughout the period of the second stage or may vary depending on the additions performed.

The quantities of the components used during the second stage may be such that:

- an atomic ratio of the quantity of Zr of the zirconium metallocene (B) to that of the Mg of the support is from 0.001 to 1, preferably from 0.005 to 0.5, and more particularly from 0.01 to 0.1,
- an atomic ratio of the quantity of A1 of the compound (E) to that of Zr of the zirconium metallocene (B) is from 0 to 1,000, preferably from 1 to 500, especially from 1 to 200, and
- an atomic ratio of the quantity of transition metal (TM) (titanium and/or vanadium) of the halide (C) to that of Mg of the support is from 0.01 to 10, preferably from 0.05 to 5, especially from 0.1 to 3.

The quantity of the transition metal halide (C) used for preparing the catalyst may also be such that the atomic ratio of the quantity of the transition metal (TM) of the halide (C) to that of Zr of the zirconium metallocene (B) is from 0.1 to 100, preferably from 0.5 to 50.

The second stage of the catalyst preparation may be carried out in the presence of an organic electron-donor compound free from labile hydrogen, added when the components are brought into contact, it being possible for this electron-donor compound to be identical to or different from the compound D1 present in the support employed. It may be chosen from organic electron-donor compounds free from labile hydrogen as further described above and may also be chosen from silicon compounds, such as silane compounds having the general formula:

$$R^{10}_{4-n}Si(OR^{11})_n$$

wherein $R^{10}$ and $R^{11}$ being identical or different denote an alkyl, aryl, cycloalkyl, or aralkyl radicals, e.g. of 1 to 19 carbon atoms and n is a member from 1 to 4; the silane compound may be the cyclohexylmethyldimethoxy silane.

The catalyst is generally prepared under an inert atmosphere and the liquid hydrocarbons used are generally free from moisture.

The catalyst is obtained in the form of a solid which can be isolated by removing the hydrocarbon solvent(s) employed during the preparation. The solvent(s) may, for example, be evaporated off at atmospheric pressure or a lower pressure. The solid catalyst may also be washed with a liquid hydrocarbon, preferably an aliphatic hydrocarbon such as n-hexane or n-heptane. The catalyst is in the form of spheroidal particles whose morphology, size and particle size distribution are substantially identical with those of the solid support (A) employed for preparing the catalyst and are otherwise described above.

It has surprisingly been found that the catalyst may comprise relatively large quantities of zirconium, titanium and/or vanadium. It is thought that this surprising result is due to the fact that the solid magnesium chloride support (A) employed is of a particular nature. It comprises, in particular, an electron-donor compound D1 free from labile hydrogen, distributed homogeneously in the support and initially present in the support, in a relatively large quantity. Furthermore, this result is also due to the fact that the support has been subjected during the first stage of the catalyst preparation to a treatment with an electron-donor compound containing labile hydrogen, D2 and that it consequently contains a mixture of the two electron-donor compounds, D1 and D2.

The solid catalyst may be employed directly in a (co)-polymerisation of olefin, e.g. $C_2$ to $C_8$ alpha-olefin, such as ethylene or propylene, preferably ethylene, in the presence of a cocatalyst chosen from the organometallic compounds of a metal belonging to group II or III of the Periodic Classification of the elements. Preferably the cocatalyst may be one or more organoaluminium compounds such as a trialkylaluminium, an alkylaluminium hydride, an alkylaluminium alkoxide or an alkylaluminium halide, e.g. with each alkyl group of 1 to 10 carbon atoms, such as trimethylaluminium, triethylaluminium, triisobutylaluminium, tri-n-hexylaluminium, tri-n-octylaluminium or diethylaluminium chloride, and preferably an aluminoxane corresponding to one of the general formulae mentioned above. The organoaluminium

compound or preferably the aluminoxane employed as cocatalyst during the polymerisation may be identical or different from that which is optionally present in the catalyst. The aluminoxane may be employed mixed with an organoaluminium compound such as that described above, e.g. a trialkylaluminium such as trimethylaluminium. When the cocatalyst is an organoaluminium compound, its quantity employed in polymerisation is such that the total atomic ratio of the quantity of aluminium to those of zirconium and transition metal (TM) in the polymerisation medium is from 10 to 1000, preferably 10 to 500, especially 20 to 300.

The solid catalyst may be employed as such in polymerisation, or else in the form of an olefin prepolymer. A prepolymerisation step is a preferred method in a heterogeneous process for polymerising olefins by means of the present catalyst, because both the zirconium metallocene and the transition metal (TM) halide are more strongly fixed in the support than a non-prepolymerised catalyst and they are less capable of being extracted from the catalyst and producing fine particles of polymer during the polymerisation.

Another advantage of transforming the present catalyst into a prepolymer is the improvement of the quality of the polymers obtained therefrom, in particular a polymer powder with a better morphology, higher bulk density and improved flowing properties.

The prepolymer is obtained by bringing the solid catalyst into contact with at least one olefin, e.g. $C_2$ to $C_8$ alpha-olefin, such as ethylene or propylene, preferably ethylene or a mixture of ethylene and at least one alpha-olefin containing from 3 to 8 carbon atoms. The prepolymerisation may be performed in a slurry in a liquid hydrocarbon or in a gas phase, at a temperature of from 0 to 100 °C, preferably from 20 to 90 °C, especially from 50 to 80 °C, and under a total pressure of from 0.1 to 5 MPa. The prepolymerisation may be performed in the presence of a cocatalyst, such as that described above, either by adding to the prepolymerisation medium the cocatalyst, such as an organoaluminium compound or preferably an aluminoxane or a mixture of an aluminoxane with an organoaluminium compound, e.g. a trialkylaluminium, or by using the catalyst containing the organoaluminium compound (E) preferably the aluminoxane described above in a sufficient quantity to get an active prepolymer, or by a combination of the two methods, in such a way that the total atomic ratio of Al/(Zr + TM) in the prepolymerisation medium is from 10 to 1000, preferably 10 to 500 and especially 20 to 300. The cocatalyst added to the prepolymerisation medium, if any, may be identical to or different from that used in the polymerisation. The prepolymerisation may be stopped when the prepolymer contains from 0.1 to 500 g, preferably from 1 to 400 g, especially from 10 to 250 g of polyolefin per millimole of zirconium and transition metal (TM).

The prepolymer constitutes a further aspect of the invention and preferably consists of particles of polyethylene or a copolymer of ethylene with up to 10% by weight of at least one C3 to $C_8$ alpha-olefin, and comprises a catalyst containing a zirconium metallocene and at least one halide of a transition metal (TM) selected amongst titanium or vanadium in an active form for a (co-)polymerisation of olefins. The catalyst component of the prepolymer essentially comprises atoms of magnesium, chloride, aluminium, zirconium, titanium and/or vanadium, and preferably is free from refractory oxide, such as alumina or silica. The prepolymer contains from 0.1 to 500, preferably from 1 to 400, especially from 10 to 250 g of polyethylene or a copolymer of ethylene per millimole of zirconium and transition metal (TM), and has a total atomic ratio of Al/(Zr + TM) from 10 to 1000, preferably from 10 to 500 and especially from 20 to 300. Advantageously, the prepolymer may consist of spherical particles, having a mass-average diameter Dm from 10 to 500, preferably from 30 to 300, especially from 50 to 250 microns, and a narrow particle size distribution such that the ratio of Dm to the number-average diameter Dn of the particles is not higher than 3, preferably not higher than 2.5, especially not higher than 2.

The catalyst or the prepolymer is particularly suitable for a heterogeneous polymerisation process either in suspension in an aliphatic hydrocarbon or in gaseous phase in a fluidised bed, under a total pressure of 0.1 to 5 MPa at a temperature of 0 to 110 °C, in the presence of a cocatalyst, such as that described above, particularly an organoaluminium compound, preferably an aluminoxane or a mixture of trialkyaluminium with an aluminoxane such as that described above, in a quantity such that the total atomic ratio of Al/(Zr + TM) in the (co-)polymerisation medium is from 10 to 1000, preferably 10 to 500, especially 20 to 300. The catalyst or the prepolymer is preferably used in a gas phase polymerisation process, such as in a fluidised bed, because the (co-)polymers of ethylene thus obtained generally consist of powders having improved flowing properties and higher bulk density in comparison with those obtained in a slurry process.

The polymers or copolymers of ethylene obtained according to the present invention may have a density from 0.89 to 0.965 g/cm$^3$, a weight-average molecular weight, Mw, from $2 \times 10^4$ to $1 \times 10^6$, preferably from $5 \times 10^4$ to $5 \times 10^5$ and a molecular weight distribution expressed by Mw/Mn from 2 to 15, preferably 3 to 12. They may have a molecular weight distribution of a bimodal type as shown as Figure 1, and containing two distinct groups of polyethylene whose weight-average molecular weights are comprised

between $10^4$ and $10^5$ and between $10^5$ and $10^6$ respectively. They have catalyst residues free from refractory oxide, such as silica or alumina, essentially consisting of atoms of magnesium, chlorine, aluminium, zirconium, titanium and/or vanadium, the quantity of zirconium being 0.5 to 20, preferably from 1 to 10, especially from 1 to 6 (ppm) parts by weight per million parts of (co-)polymer. The titanium and/or vanadium content of the (co-)polymers may be less than 0.5 ppm and not higher than 30 ppm, e.g. from 0.5 to 20 ppm, preferably from 0.5 to 10 ppm, particularly when the zirconium content is from 1 to 6 ppm.

The (co-)polymers have a level of ethylenic unsaturation not higher than 0.6, e.g. 0.1 to 0.6, preferably 0.3 to 0.5 per 1000 carbon atoms. Particularly, their level of vinyl unsaturation may be not higher than 0.5, e.g. 0.1 to 0.5, preferably 0.2 to 0.4 per 1000 carbon atoms. Furthermore, their level of vinylidene unsaturation may be not higher than 0.2, e.g. 0.01 to 0.2, preferably 0.05 to 0.1 per 1000 carbon atoms.

The copolymers of ethylene may contain up to 30% by weight, e.g. from about 0.1 to 25% by weight, preferably from 5 to 25% by weight of at least one $C_3$ to $C_8$ alpha-olefin, e.g. propylene, butene-1, hexene-1, methyl-4-pentene-1 or octene-1.

Advantageously, the (co-)polymers of ethylene of the present invention may be directly obtained from a gas phase (co-)polymerisation in the form of a powder having a bulk density from 0.3 to 0.55, preferably from 0.3 to 0.5 g/cm$^3$, and preferably consisting of spheroidal porous particles having a mass-average diameter Dm from 150 to 1500, preferably from 160 to 1000 microns, and a narrow particle size distribution such that the ratio of Dm to the number-average diameter Dn of the particles is not higher than 3.5, preferably not higher than 3, especially not higher than 2.5 or even not higher than 2.

Method of determining the mass-average (Dm) and number average (Dn) diameters of particles

According to the invention, the mass-average (Dm) and number-average (Dn) diameters of the support, catalyst, prepolymers or polymer particles are measured in the basis of microscopic observations, by means of the Optomax image analyser (Micro-Measurements Ltd., Great Britain). The principle of the measurement consists in obtaining, from the experimental study of a population of particles using optical microscopy, a frequency table which gives the number (ni) of particles belonging to each class (i) of diameters, each class (i) being characterised by an intermediate diameter (di) included within the limits of the said class. According to the approved French Standard NF X 11-630 of June 1981, Dm and Dn are given by the following formulae:

$$\text{mass-average diameter:} \quad Dm = \frac{\sum ni(di)^3 di}{\sum ni(di)^3}$$

$$\text{number-average diameter:} \quad Dn = \frac{\sum nidi}{\sum ni}$$

The ratio Dm/Dn characterised the particle size distribution; it is sometimes called "width of the particle size distribution". The measurement using the Optomax image analyser is carried out by means of an inverted microscope which permits the examination of the suspension of particles with a magnification of between 16 and 200 times. A television camera picks up the images given by the inverted microscope and transmits them to a computer which analyses the images received line by line, in order to determine the particle dimensions or diameters, and then classify.

Measurement of the molecular weight distribution of (co-)polymer

The molecular weight distribution of a (co-)polymer is calculated according to the ratio of the weight-average molecular weight, Mw, to the number-average molecular weight, Mn, of the (co-)polymer, from a molecular weight distribution curve obtained by means of a "Waters" (trademark) model "150C" gel permeation chromatograph (High Temperature Size Exclusion Chromatograph), the operating conditions being the following:

- solvent: 1,2,4-trichlorobenzene
- solvent flow rate: 1 ml/minute
- three "Shodex" (trade mark) model "AT 80 M/S" columns

- temperature: 150 °C
- sample concentration: 0.1% by weight
- injection volume: 500 microlitres
- detection using a refractometer integral with the chromatograph - standardisation using a high density polyethylene sold by BP Chemicals S.N.C. under the trade name "Rigidex 6070 EA" Mw = 65,000 and Mw/Mn = 4, and of a high density polyethylene which has: Mw = 210,000 and Mw/Mn = 17.5.

The following nonlimiting examples illustrate the invention.

Example 1

(a) Preparation of a support

10.2 litres of a mixture containing 10 moles of dibutylmagnesium in n-hexane, 6.45 litres of n-hexane and finally 1 litre of diisoamyl ether were introduced in the course of a first stage under nitrogen, at room temperature (25 °C), into a 30-litre stainless steel reactor equipped with a stirrer rotating at a speed of 600 revolutions per minute and with a jacket. In a second stage, when the speed of the stirrer was maintained at 600 revolutions per minute and the reaction temperature at 25 °C, 2.4 l of tert-butylchloride were added to the mixture thus obtained, at a constant flow rate during 12 hours. At the end of this period the reaction mixture was maintained at 25 °C for 3 hours. The precipitate obtained was washed six times each with 15 litres of n-hexane at 25 °C. The solid product obtained constituted the magnesium dichloride support, containing 0.12 moles of diisoamyl ether and less than 0.001 mole of Mg-C bond per mole of magnesium dichloride.

When examined with a microscope, the support was in the shape of spheroidal particles which had a mass-average diameter of 35 microns and an extremely narrow particle size distribution, such that the Dm/Dn ratio of the particles was equal to 1.4.

The specific surface area of the support was approximately 45 $m^2/g$ (BET).

(b) Preparation of a catalyst

150 ml of n-hexane containing a quantity of previously prepared support corresponding to 100 millimoles of magnesium dichloride were introduced at 25 °C under nitrogen atmosphere into a glass reactor with a capacity of 1 litre, equipped with a stirrer rotating at 350 revolutions per minute and with a heating and cooling system, followed slowly by 20 millimoles of n-butanol over 1 hour. The mixture was stirred at 25 °C for 1 hour. At the end of this period the support was washed with 500 ml of n-hexane at 25 °C.

A 110 ml n-hexane suspension of the previously washed support, containing 100 millimoles of magnesium was kept at 25 °C under a nitrogen atmosphere in the same reactor. 100 ml of a solution of bis-(cyclopentadienyl)dichlorozirconium (Cp2ZrC12) in toluene containing 10 millimoles of Zr were then slowly introduced into the reactor over 1 hour. At the end of this period the solid thus obtained was washed twice, each with 500 ml of n-hexane at 25 °C. The reactor was then heated to 90 °C and the mixture was then stirred at 90 °C for 2 hours. At the end of this period the reactor was cooled to 50 °C and the solid catalyst was washed four times, each with 200 ml of n-hexane at 50 °C and then twice, each with 200 ml of n-hexane at 25 °C, while cooling the reactor to 25 °C.

A solid catalyst which was ready for use was in the form of spheroidal particles which had Dm = 35 microns and a Dm/Dn ratio = 2.1. It contained the elements Zr, Ti and Mg and the butoxy radical with the following molar ratios:

| | |
|---|---|
| Zr/Mg | = 0.029 |
| Ti/Mg | = 0.024 |
| Butoxy/Mg | = 0.016 |

(c) Polymerisation of ethylene in suspension in n-hexane

500 ml of n-hexane were introduced under a nitrogen atmosphere into a stainless steel reactor with a capacity of 2 litres, equipped with a stirrer rotating at 350 revolutions/minute and with heating and cooling system. The reactor was heated to 70 °C and a quantity of previously prepared catalyst was introduced into

it, corresponding to 0.01 millimole of zirconium and 25 milliatoms of aluminium as methylaluminoxane (MAO) in solution at a concentration of 30% by weight in toluene, the solution (MAO) being sold by Schering Company (Germany). A volume of 50 ml of hydrogen, measured under normal conditions, was then introduced into the reactor, followed by ethylene at a steady flow rate of 60 g/h during 1 hour. At the end of this period the polymerisation was stopped and after the n-hexane had been removed, a polyethylene powder was recovered, consisting of spheroidal particles which have Dm = 400 microns and a Dm/Dn ratio = 2.5. The Mw value of the polyethylene was 1.8 x $10^5$. The Mw/Mn ratio of the polyethylene, measured by GPC was 4.2 and the molecular weight distribution curve shown in Figure 1 was of a bimodal type, containing two distinct groups of polyethylene whose weight-average molecular weights were between $10^4$ and $10^5$ and between $10^5$ and $10^6$ respectively.

Example 2

(a) Preparation of a support

The procedure was exactly as in Example 1.

(b) Preparation of a catalyst

150 ml of n-hexane containing a quantity of previously prepared support corresponding to 100 millimoles of magnesium dichloride were introduced at 25 °C under nitrogen atmosphere into a glass reactor with a capacity of 1 litre, equipped with a stirrer rotating at 350 revolutions per minute and with a heating and cooling system, followed slowly be 100 milliomoles of n-butanol over 2 hours. The mixture was stirred at 25 °C for 1 hour. At the end of this period the support was washed with 500 ml of n-hexane at 25 °C.

A 110 ml n-hexane suspension of the previously washed support, containing 100 millimoles of magnesium was kept at 25 °C in the same reactor under nitrogen atmosphere. 25 milliatoms of aluminium as (MAO) in solution at a concentration of 30% by weight in toluene were introduced into the reactor with stirring at 25 C. The reactor was heated to 70 °C and the mixture thus obtained was then stirred at 70 °C for 2 hours. At the end of this period the reactor was cooled to 50 °C and the solid thus obtained was washed four times, each with 200 ml of n-hexane at 50 °C and twice, each with 200 ml of n-hexane at 25 °C while cooling the reactor to 25 °C. 100 ml of a solution of (Cp2ZrCl2) in toluene containing 5 millimoles of zirconium were then introduced into the reactor at 25 °C. The reactor was heated to 70 °C and the mixture was stirred at 70 °C for 2 hours. At the end of this period the reactor was cooled to 50 °C and the solid thus obtained was washed four times each with 200 ml of n-hexane at 50 °C and twice each with 200 ml of n-hexane at 25 °C while cooling the reactor to 25 °C. 100 millimoles of TiCl4 were then introduced into the reactor at 25 °C. The reactor was heated to 100 °C and the mixture was then stirred at 100 °C for 2 hours. At the end of this period the reactor was cooled to 50 °C and the catalyst thus obtained was washed four times, each with 200 ml of n-hexane at 50 °C and twice, each with 200 ml of n-hexane at 25 °C while cooling the reactor at 25 °C. A solid catalyst which was ready for use was obtained in the form of spheroidal particles which had Dm = 35 microns and a Dm/Dn ratio = 1.4. It contained the elements Zr, Mg, Ti and Al and the butoxy radical with the following molar ratios:

| | |
|---|---|
| Zr/Mg | = 0.008 |
| Al/Zr | = 14 |
| Ti/Mg | = 0.215 |
| butoxy/Mg | = 0.252 |

(c) Polymerisation of ethylene in suspension in n-hexane

500 ml of n-hexane were introduced under a nitrogen atmosphere into a stainless steel reactor with a capacity of 2 litres, equipped with a stirrer rotating at 350 revolutions/minute and with a heating and cooling system. The reactor was heated to 70 °C and a quantity of previously prepared catalyst was introduced into it, corresponding to 0.0025 millimoles of zirconium and 25 milliatoms of aluminium as methylaluminoxane (MAO) in solution at a concentration of 30% by weight in toluene. Ethylene was then introduced into the reactor at a steady flow rate of 60 g/h during 200 minutes. At the end of this period the polymerisation was

stopped and after n-hexane had been removed a polyethylene powder was recovered, consisting of spheroidal particles which had Dm = 450 microns and a Dm/Dn ratio = 1.5. The Mw value of the polyethylene was 4.4 x $10^5$. The Mw/Mn ratio of the polyethylene, measured by GPC, was 3.5.

Example 3

(a) Preparation of a support

The procedure was exactly as in Example 1.

(b) Preparation of a catalyst

The procedure was exactly as in Example 2, apart from the fact that instead of introducing 100 millimoles of $TiCl_4$ into the reactor, 100 millimoles of vanadium tetrachloride were introduced therein.

A solid catalyst was obtained in the form of spheroidal particles which had Dm = 35 microns and a Dm/Dn ratio = 1.5. It contained the elements Zr, Mg, V and Al and the butoxy radical with the following molar ratios:

| | |
|---|---|
| Zr/Mg | = 0.01 |
| Al/Zr | = 12 |
| V/Mg | = 0.19 |
| butoxy/Mg | = 0.24 |

(c) Polymerisation of ethylene in suspension in n-hexane

The operation was carried out exactly as in Example 2, apart from the fact that instead of employing the catalyst prepared in Example 2, the catalyst prepared in Example 3 was employed.

A polyethylene powder was obtained, consisting of spheroidal particles which had Dm = 450 microns and a Dm/Dn ratio = 1.6.

Example 4

(a) Catalyst Preparation

The procedure was exactly as in Example 2.

(b) Prepolymer Preparation

Into a 5 litre stainless steel reactor equipped with a stirrer rotating at 500 revolutions/minutes were introduced under nitrogen 2 litres of n-hexane which were heated to 70 °C, then a mixture consisting of 300 milliatoms of aluminium as (MAO) in solution at a concentration of 30% by weight in toluene and a quantity of the previously prepared catalyst corresponding to 1.5 milliatoms of zirconium. Ethylene was then introduced into the reactor at a uniform rate of 120 g/h for 90 minutes. At the end of this period, the reactor was cooled at 20 °C and the content of the reactor was transferred to a rotary evaporator. The solvent was evaporated off under reduced pressure at a temperature of 60 °C. A prepolymer was thus obtained and stored under nitrogen. It contained 71 g of polyethylene per millimole of zirconium and titanium and the atomic ratio of Al/(Zr + Ti) was 14. It consisted of spheroidal particles having Dm = 90 microns and a particle size distribution such that the ratio Dm/Dn = 1.6.

(c) Gas phase polymerisation of ethylene

A powder charge of 800 g of a polyethylene originating from a preceding polymerisation and which had been stored under nitrogen, was introduced into a fluidised bed reactor of 18 cm diameter. The reactor was heated to 80 °C and ethylene was introduced into it, so as to obtain a pressure of 0.8 MPa. Ethylene passed upwardly through the bed with a fluidised speed of 30 cm/sec.

25 g of the previously prepared prepolymer were introduced into the fluidisesd bed reactor and the temperature in the bed was kept at 80 °C during 3 hours. A polyethylene powder was thus prepared having a density of 0.95 g/$cm^3$. The powder consisted of spheroidal particles, having Dm = 500 microns and a ratio Dm/Dn = 1.6, and a bulk density of 0.42 g/$cm^3$.

Example 5

Gas phase copolymerisation of ethylene with butene-1

The procedure was exactly as in Example 4, apart from the fact a gaseous mixture of 85% by volume of ethylene and 15% by volume of butene-1 was introduced into the reactor, so as to obtain a total pressure of 0.8 MPa.

A copolymer of ethylene with butene-1 in the form of a powder was thus prepared having a density of 0.92 g/$cm^3$ and consisting of spheroidal particles.

## Claims

**1.** Solid catalyst suitable for a heterogeneous process for polymerising one or more olefins, the solid catalyst being prepared by contacting a zirconium metallocene with a magnesium chloride support, characterised in that the solid catalyst is obtainable by a process comprising:

(i) a first stage, wherein a solid support (A) containing from 80 to 99.5 mol % of magnesium dichloride and from 0.5 to 20 mol % of at least one organic electron-donor compound, D1, free for labile hydrogen, the solid support (A) being in the form of spheroidal particles with a D/d ratio of lower than or equal to 1.5, where D and d are the major and the minor axis of the particles Respectively, and with a mass-mean diameter, Dm, of 10 to 100 microns and a particle size distribution such that the ratio of Dm to the number-average diameter, Dn, of the particles is not higher than 3, is brought into contact with at least one electron-donor compound, D2, containing labile hydrogen, to form a support (A'),

(ii) a second stage, wherein the support (A') is brought into contact with a zirconium metallocene (B) and at least one halide (C) of a transition metal (MT) chosen from titanium and vanadium, and optionally with an organoaluminium compound (E) preferably an aluminoxane.

**2.** Solid catalyst according to Claim 1, characterised in that the organic electron-donor compound, D1, free from labile hydrogen is chosen from ethers, esters, thioethers, sulphones, sulphoxides, secondary amides, tertiary amines, tertiary phosphines and phosphoramides.

**3.** Solid catalyst according to Claim 1, characterised in that the electron-donor compound, D2, containing labile hydrogen is chosen from alcohols, phenols, primary amides, primary or secondary amines, primary or secondary phosphines, and carboxylic acids.

**4.** Process for preparing the solid catalyst according to Claim 1, characterised in that:

(i) in the first stage, the compound D2 is used in an amount such that the molar ratio of the quantity of D2 to that of magnesium of the support is from 0.05 to 2.5, and

(ii) in the second stage, the amounts of the compounds used are such that the atomic ratio of the quantity of Zr of the zirconium metallocene (B) to that of Mg of the support is from 0.001 to 1, the atomic ratio of the quantity of Ti and/or V of the halide (C) to that of Mg of the support is from 0.01 to 10, and the atomic ratio of the quantity of Al of the compound (E) to that of Zr of the zirconium metallocene (B) is from 0 to 1,000, preferably from 1 to 500.

**5.** Prepolymer particles characterised in that they comprise (i) a polyethylene or a copolymer of ethylene with up to 10% by weight of at least one C3 to C8 alpha-olefin and (ii) an active catalyst for a (co-)polymerisation of olefins essentially containing atoms of magnesium, chlorine, aluminium, zirconium, titanium and/or vanadium, and comprising an organoaluminium compound as cocatalyst and the solid catalyst according to Claim 1, in quantity such that the prepolymer contains from 0.1 to 500 g of polyethylene or copolymer of ethylene per millimole of Zr and transition metal (TM), and the atomic ratio of Al/(Zr + TM) is from 10 to 1,000.

6. Prepolymer particles according to Claim 5, characterised in that they consist of spheroidal particles having a mass-average diameter of Dm from 10 to 500 microns and a particle size distribution such that the ratio of Dm to the number-average diameter Dn of the particles is not higher than 3.

7. Process for preparing the prepolymer particles according to Claim 5, characterised in that the solid catalyst according to Claim 1 is contacted with ethylene or a mixture of ethylene and at least one C3 to C8 alpha-olefin in a liquid hydrocarbon or in a gas phase, at a temperature from 0 to 100 °C, under a total pressure from 0.1 to 5 MPa, in the presence of an organoaluminium compound in a quantity such that the atomic ratio of Al/(Zr + TM) is from from 10 to 1,000.

8. Process for polymerising ethylene or copolymerising ethylene with at least one C3 to C8 alpha-olefin, charactereised in that the solid catalyst according to Claim 1 or the prepolymer particles according to Claim 5 are contacted with ethylene or a mixture of ethylene with at least one C3 to C8 alpha-olefin, at a temperature of 0 to 110 °C, under a total pressure of 0.1 to 5 MPa, in the presence of an organoaluminium compound, in a quantity such that the atomic ratio of Al/(Zr + TM) is from 10 to 1,000.

**Patentansprüche**

1. Fester Katalysator, geeignet für ein heterogenes Verfahren zur Polymerisation von einem oder mehreren Olefinen, wobei der feste Katalysator hergestellt wird, indem ein Zirkoniummetallocen mit einem Magnesiumchloridträger in Kontakt gebracht wird, **dadurch gekennzeichnet,** daß der feste Katalysator erhältlich ist mit einem Verfahren umfassend:
   (i) eine erste Stufe, worin ein fester Träger (A), der 80 bis 99,5 Mol-% Magnesiumdichlorid und 0,5 bis 20 Mol-% mindestens einer organischen Elektronendonator-Verbindung D1, die frei ist von labilem Wasserstoff, enthält, wobei der feste Träger (A), der in Form von rundlichen Teilchen vorliegt, mit einem Verhältnis D/d von weniger als oder gleich 1,5, wobei D und d die größere bzw. kleinere Achse der Teilchen ist, und mit einem massenmittleren Durchmesser Dm von 10 bis 100 µm und einer solchen Teilchengrößen-Verteilung, daß das Verhältnis von Dm zu dem zahlenmittleren Durchmesser Dn der Teilchen nicht größer als 3 ist, in Kontakt gebracht wird mit mindestens einer Elektronendonator-Verbindung D2, die labilen Wasserstoff enthält, unter Bildung eines Trägers (A'),
   (ii) eine zweite Stufe, worin der Träger (A') in Kontakt gebracht wird mit einem Zirkoniummetallocen (B) und mindestens einem Halogenid (C) eines Übergangsmetalls (TM) ausgewählt aus Titan und Vanadium und gegebenenfalls mit einer Organoaluminium-Verbindung (E), die vorzugsweise ein Aluminoxan ist.

2. Fester Katalysator nach Anspruch 1, **dadurch gekennzeichnet,** daß die organische Elektronendonator-Verbindung D1, die frei ist von labilem Wasserstoff, ausgewählt ist aus Ethern, Estern, Thioethern, Sulfonen, Sulfoxiden, sekundären Amiden, tertiären Aminen, tertiären Phosphinen und Phosphoramiden.

3. Fester Katalysator nach Anspruch 1, **dadurch gekennzeichnet,** daß die Elektronendonator-Verbindung D2, die labilen Wasserstoff enthält, ausgewählt ist aus Alkoholen, Phenolen, primären Amiden, primären oder sekundären Aminen, primären oder sekundären Phosphinen und Carbonsäuren.

4. Verfahren zur Herstellung des festen Katalysators nach Anspruch 1, **dadurch gekennzeichnet,** daß
   (i) in der ersten Stufe die Verbindung D2 in einer solchen Menge verwendet wird, daß das molare Verhältnis der Menge von D2 zu der Menge von Magnesium des Trägers 0,05 bis 2,5 ist und
   (ii) in der zweiten Stufe die Mengen der verwendeten Verbindungen so sind, daß das Atomverhältnis der Menge von Zr in dem Zirkoniummetallocen (B) zu der Menge von Mg im Träger 0,001 bis 1 ist, das Atomverhältnis der Menge von Ti und/oder V des Halogenids (C) zu der Menge von Mg im Träger 0,01 bis 10 ist und das Atomverhältnis der Menge von Al der Verbindung (E) zu der Menge von Zr in dem Zirkoniummetallocen (B) 0 bis 1.000, vorzugsweise 1 bis 500 ist.

5. Präpolymerteilchen, **dadurch gekennzeichnet,** daß sie (i) ein Polyethylen oder ein Copolymer von Ethylen mit bis zu 10 Gew.-% mindestens eines $C_3$-$C_8$-$\alpha$-Olefins und (ii) einen aktiven Katalysator für eine (Co)-Polymerisation von Olefinen, der im wesentlichen Atome von Magnesium, Chlor, Aluminium, Zirkonium, Titan und/oder Vanadium enthält, umfassen und eine Organoaluminium-Verbindung als Co-Katalysator und den festen Katalysator nach Anspruch 1 in einer solchen Menge, daß das Präpolymer 0,1 bis 500 g Polyethylen oder Ethylencopolymer pro mmol Zr und Übergangsmetall (TM) enthält und das Atomverhältnis von Al/(Zr + TM) 10 bis 1.000 ist, umfassen.

**6.** Präpolymerteilchen nach Anspruch 5, **dadurch gekennzeichnet,** daß sie aus rundlichen Teilchen bestehen mit einem massenmittleren Durchmesser Dm von 10 bis 500 µm und einer solchen Teilchengrößen-Verteilung, daß das Verhältnis von Dm zu dem zahlenmittleren Durchmesser Dn der Teilchen nicht größer als 3 ist.

**7.** Verfahren zur Herstellung der Präpolymerteilchen nach Anspruch 5, **dadurch gekennzeichnet,** daß der feste Katalysator nach Anspruch 1 mit Ethylen oder einer Mischung aus Ethylen und mindestens einem $C_3$-$C_8$-α-Olefin in einem flüssigen Kohlenwasserstoff oder in einer Gasphase bei einer Temperatur von 0 bis 100 °C und einem Gesamtdruck von 0,1 bis 5 MPa in Gegenwart einer Organoaluminium-Verbindung in einer solchen Menge, daß das Atomverhältnis von Al/(Zr + TM) 10 bis 1.000 beträgt, in Kontakt gebracht wird.

**8.** Verfahren zur Polymerisation von Ethylen oder zur Co-polymerisation von Ethylen mit mindestens einem $C_3$-$C_8$-α-Olefin, **dadurch gekennzeichnet,** daß der feste Katalysator nach Anspruch 1 oder die Präpolymerteilchen nach Anspruch 5 mit Ethylen oder einer Mischung aus Ethylen mit mindestens einem $C_3$-$C_8$-α-Olefin bei einer Temperatur von 0 bis 110 °C bei einem Gesamtdruck von 0,1 bis 5 MPa in Gegenwart einer Organoaluminiumverbindung in einer solchen Menge, daß das Atomverhältnis von Al/(Zr + TM) 10 bis 1.000 ist, in Kontakt gebracht wird/werden.

**Revendications**

**1.** Catalyseur solide convenant pour un procédé hétérogène de polymérisation d'une ou plusieurs oléfines, le catalyseur solide étant préparé par mise en contact d'un métallocène de Zirconium avec un support de chlorure de magnésium, caractérisé en ce que le catalyseur solide peut être obtenu par un procédé comprenant:

(i) un premier stade dans lequel un support solide (A) contenant de 80 à 99,5% moi. de dichlorure de magnésium et de 0,5 à 20% mol. d'au moins un composé organique donneur d'électrons, D1, exempt d'hydrogène labile, le support solide (A), se présentant sous forme de particules sphéroïdales à rapport D/d inférieur ou égal à 1,5, où D et d sont respectivement le grand axe et le petit axe des particules, et un diamètre moyen en masse, Dm, de 10 à 100 µm et une granulométrie telle que le rapport entre Dm et le diamètre moyen en nombre, Dn, des particules n'est pas supérieur à 3, est mis en contact avec au moins un composé donneur d'électrons, D2, contenant de l'hydrogène labile, pour former un support (A'),

(ii) un second stade, dans lequel le support (A') est mis en contact avec un métallocène de zirconium (B) et au moins un halogénure (C) d'un métal de transition (MT) choisi parmi le titane et le vanadium, et éventuellement avec un composé organoaluminium (E), de préférence un aluminoxane.

**2.** Catalyseur solide selon la revendication 1, caractérisé en ce que le composé organique donneur d'électrons, D1, exempt d'hydrogène labile est choisi parmi les éthers, les esters, les thioéthers, les sulfones, les sulfoxydes, les amides secondaires, les amines tertiaires, les phosphines tertiaires et les phosphoramides.

**3.** Catalyseur solide selon la revendication 1, caractérisé en ce que le composé donneur d'électrons, D2, contenant de l'hydrogène labile est choisi parmi les alcools, les phénols, les amides primaires, les amines primaires ou secondaires, les phosphines primaires ou secondaires, et les acides carboxyliques.

**4.** Procédé pour la préparation du catalyseur solide selon la revendication 1, caractérisé en ce que:

(1) dans le premier stade, le composé D2 est utilisé en une quantité telle que le rapport molaire entre la quantité de D2 et celle du magnésium du support soit de 0,05 à 2,5, et

(ii) dans le second stade, les quantités des composés utilisés sont telles que le rapport atomique entre la quantité du Zr du métallocène de zirconium (B) et celle du Mg du support est de 0,001 à 1, le rapport atomique entre la quantité de Ti et/ou V du halogénure (C) et celle du Mg du support est de 0,01 à 10, et le rapport atomique entre la quantité d'Al du composé (E) et celle du Zr du

métallocène de Zirconium (B) est de 0 à 1.000, de préférence de 1 à 500.

**5.** Particules de prépolymère, caractérisées en ce qu'elles comprennent (i) un polyéthylène ou un copolymère d'éthylène avec jusqu'à 10% en poids d'au moins une alpha-oléfine en $C_3$ à $C_8$, et (ii) un catalyseur pour une (co)polymérisation d'oléfines contenant essentiellement des atomes de magnésium, de chlore, d'aluminium, de zirconium, de titane et/ou de vanadium et comprenant un compose organoaluminium comme cocatalyseur et le catalyseur solide selon la revendication 1, en une quantité telle que le prépolymère contienne de 0,1 à 500 g de polyéthylène ou de copolymère à base d'éthylène par millimolécule-gramme de Zr et de métal de transition (MT), et que le rapport atomique d'Al/(Zr + MT)soit de 10 à 1 000.

**6.** Particules de prépolymère selon la revendication 5, caractérisées en ce qu'elles se composent de particules sphéroïdales ayant un diamètre moyen en masse Dm de 10 à 500 µm et une granulométrie telle que le rapport entre Dm et le diamètre moyen en nombre Dn des particules ne soit pas supérieur à 3.

**7.** Procédé pour la préparation des particules de prépolymère selon la revendication 5, caractérisé en ce que le catalyseur solide selon la revendication 1 est mis en contact avec de l'éthylène ou un mélange d'éthylène et d'au moins une alpha-oléfine en $C_3$ à $C_8$ dans un hydrocarbure liquide ou en phase gazeuse, à une température de 0 à 100 °C, sous une pression totale de 0,1 à 5 MPa, en présence d'un composé organoaluminium en une quantité telle que le rapport atomique d'Al/(Zr + MT) soit de 10 à 1 000.

**8.** Procédé pour la polymérisation d'éthylène ou la copolymérisation d'éthylène avec au moins une alpha-oléfine en $C_3$ à $C_8$, caractérisé en ce que le catalyseur solide selon la revendication 1 ou les particules de prépolymère selon la revendication 5 sont mis en contact avec de l'éthylène ou un mélange d'éthylène avec au moins une alpha-oléfine en $C_3$ à $C_8$, à une température de 0 à 110 °C, sous une pression totale de 0,1 à 5 MPa, en présence d'un composé organoaluminium en une quantité telle que le rapport atomique d'Al/(Zr + MT) soit de 10 à 1 000.

FIG.1